(19) Europäisches Patentamt
European Patent Office
Office européen des brevets

(11) EP 1 096 733 B1

(12) **EUROPEAN PATENT SPECIFICATION**

(45) Date of publication and mention of the grant of the patent:
**21.09.2005 Bulletin 2005/38**

(51) Int Cl.[7]: **H04L 12/403**

(21) Application number: **00309222.8**

(22) Date of filing: **19.10.2000**

(54) **Communication method and communication system**

Kommunikationsverfahren und System

Procédé et système de communication

(84) Designated Contracting States:
**DE FR GB**

(30) Priority: **28.10.1999 JP 30769399**

(43) Date of publication of application:
**02.05.2001 Bulletin 2001/18**

(73) Proprietor: **SONY CORPORATION**
**Tokyo 141 (JP)**

(72) Inventors:
- **Sato, Masahiko**
  **Shinagawa-ku, Tokyo (JP)**
- **Terayama, Akiko**
  **Shinagawa-ku, Tokyo (JP)**

(74) Representative:
**Robinson, Nigel Alexander Julian**
**D Young & Co**
**120 Holborn**
**London EC1N 2DY (GB)**

(56) References cited:
**EP-A- 0 537 814**
**EP-A- 0 598 297**
**WO-A-98/57261**
**WO-A-99/31521**
**US-A- 5 734 642**

- **GUTTMAN E: "Service Location Protocol: Automatic Discovery of IP Network Services" IEEE INTERNET COMPUTING, IEEE SERVICE CENTER, PISCATAWAY, NJ, US, vol. 3, no. 4, 1 July 1999 (1999-07-01), pages 71-80, XP002140936 ISSN: 1089-7801**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a communication method and a communication system which perform mutual recognition among plural devices connected to a bus.

Hitherto, a system has been provided in which plural devices are connected via a bus and operate in a linked manner on the basis of data transmitted through the bus.

In such a system, it is common practice for each device to perform inquiries and to poll one another in order to recognize other devices. Polling refers to each device confirming (inquiring) with another device whether there is a data transmission request, and if there is a transmission request, the data is received.

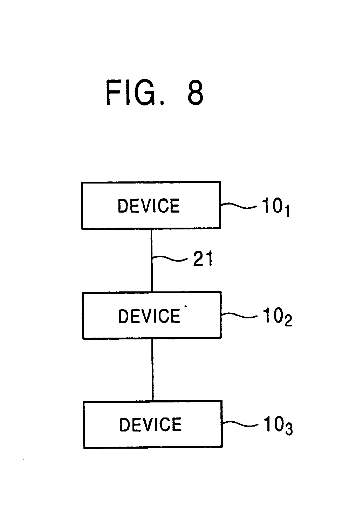

For example, in a system formed of three devices as shown in Fig. 8, polling in a conventional system is performed mutually among the three devices.

More specifically, a first device $10_1$ polls a second device $10_2$ and a third device $10_3$ ; the second device $10_2$ polls the first device $10_1$ and the third device $10_3$; and the third device $10_3$ polls the first device $10_1$ and the second device $10_2$.

However, if each device performs polling of another device in this manner, a substantial amount of the bus bandwidth is occupied for polling. Therefore, if the number of devices is increased, the occupied bus bandwidth will increase considerably.

Accordingly, it may be conceived that, for example, the first device $10_1$, on behalf of the others, performs polling of other devices, and the result is transmitted as a message to the other devices. According to this scheme, since the devices other than the representative first device $10_1$ do not perform polling, it is possible to reduce the bandwidth occupied.

However, when the second device $10_2$ and the third device $10_3$ are newly added to the system, the second device $10_2$ and the third device $10_3$ are not recognized until they are polled from the representative first device $10_1$. Therefore, since the second device $10_2$ and the third device $10_3$ are isolated until they are polled from the representative first device $10_1$, it is not possible to make full use of the mutual functions among devices, such as data exchange among devices.

Also, when the representative first device $10_1$ does not perform polling for some reason or when the representative first device $10_1$ is not present, the second device $10_2$ and the third device $10_3$ cannot be aware of the presence of each other. For this reason, it is not possible to realize functions which are possible only between the second device $10_2$ and the third device $10_3$.

The present invention has been proposed in view of the above-described circumstances. An object of at least preferred embodiments of the present invention is to provide a communication method and a communication system which are capable of reducing the amount of polling and reducing the bus transmission bandwidth without impairing the mutual functions among devices.

European Patent Application Publication No EP-A-0 537 814 discloses a communication method in general accordance with the pre-characterising part of claim 1 hereof. According to that method, a representative one of a plurality of devices connected with one another by a bus recurrently transmits an information item to the other devices for unanimous counter signalisation thereto by at least a subset of the other devices, and updates that information item in the absence of unanimous counter signalisation. The result of the updating may be signalled to the other devices.

A generally similar method is disclosed in International (PCT) Patent Application Publication No WO 99 31521 A.

International (PCT) Patent Application Publication No WO 98 57261 A discloses a computing system comprising a host computer and a plurality of wireless peripheral devices. Dynamic detection and binding of the devices is effected by the host computer.

The present invention provides a communication method according to claim 1 hereof and a communication system accordi ng to claim 4 hereof.

An embodiment of the invention will now be described, by way of example only, with reference to the accompanying drawings in which:

Fig. 1 is a diagram showing the construction of a system in which plural devices are connected to a bus;
Fig. 2 is a diagram showing the structure of a header and data which follows the header;
Fig. 3 is a diagram showing a polling command and an acknowledgement;
Fig. 4 is a diagram showing the structure of a polling command;
Fig. 5 is a flowchart showing the flow of polling;
Fig. 6 is a flowchart showing the flow of polling at a different rate of frequency;
Fig. 7 is a diagram showing polling at a different rate of frequency; and
Fig. 8 is a diagram showing the construction of a conventional system.

An embodiment of the present invention will now be described below with reference to the accompanying drawings.

First, referring to Fig. 1, a description is given of a communication system, in which plural devices are connected to a bus of a communication line, and to which a communication method of this embodiment is applied.

This system consists of n devices: a first device $10_1$ up to an n-th device $10_n$. Here, n is an integer of 2 or more.

The first device $10_1$ comprises a first control section $11_1$ for controlling the entirety of this first device

$10_1$, and a first interface section $12_1$ for connecting the control section $11_1$ to a bus 21.

The first control section $11_1$ performs control on each section of the first device $10_1$. Also, the first control section $11_1$ controls communication for other devices connected to the bus 21 via the first interface section $12_1$.

This first control section $11_1$ can be formed as a microcontroller having, for example, a CPU, a ROM, a RAM, etc.

The first interface section $12_1$ connects the first control section $11_1$ to the bus 21. The first interface section $12_1$ performs conversion between an internal data format in the first device $10_1$ and a predetermined protocol in the bus 21.

Since the construction from the second device $10_2$ to the n-th device $10_n$ is the same as the construction of the first device $10_1$, for the sake of simplicity, the same reference numerals are used, and descriptions thereof are omitted.

The bus 21 connects the devices from the first device $10_1$ to the n-th device $10_n$ so that data is transmitted among the devices. In this bus, communication is performed by a predetermined method in accordance with a predetermined protocol.

This embodiment has a feature in the method of communicating data transmitted among the devices via the bus 21. That is, in this embodiment, a device which is newly added to the bus due to a new connection or at the activation of power performs an inquiry, that is, polling, only once at that time, and confirms the presence of the device of the other party. After polling is performed once, a polling command from the above-mentioned representative device is received, and the newly connected device does not itself thereafter performs polling.

Also, in this embodiment, a device which cannot act as a device representing the system performs polling of the representative device more infrequently than the polling frequency of the representative device, and when the device is polled by the representative device, the device does not perform polling of other devices.

Furthermore, in this embodiment, when the representative device cannot be found by a device, polling is performed of other devices.

When polling is performed among devices, a client device does not usually perform polling, but performs polling only once at the set-up time of the device.

A communication method performed in this manner in a system having the construction such as that described above is described below in detail.

First, a common communication method, which is a basis of this embodiment, in a system in which plural devices are connected to a bus, is described below with reference to Fig. 2.

Here, a case, in which an n-th device $10_n$ is assumed to be a source device and a first device $10_1$ is assumed to be a destination device, is taken as an example. Needless to say, a combination of a source device and a destination device is not limited to this example.

The n-th device $10_n$ transmits a header composed of a set of a source device address which is the address of the n-th apparatus $10_n$ and a destination address which is an address of the first device $10_1$ which is the destination. This header is received by the first device $10_1$ via the bus 21.

For the transmitted header, an acknowledgement is sent back from the first device $10_1$ which is at a destination address. This makes it possible to confirm the fact that the header is received by the first device $10_1$.

The n-th device $10_n$ transmits data following the header. This data is also received by the first device $10_1$ via the bus 21, and an acknowledgement is sent back from the first device $10_1$.

A case in which the n-th device $10_n$ performs polling to the first device $10_1$ can also be performed in a manner similar to a case in which data is transmitted.

As shown in Fig. 3, in the case of polling, the n-th device $10_n$ transmits a polling command. As shown in Fig. 4, similarly to the above-mentioned header, the polling command is composed of a set of the source device address which is the address of the n-th apparatus $10_n$ and the destination address which is the address of the first device $10_1$ which is the destination.

When the first device $10_1$ receives the polling command sent from the n-th device $10_n$, the first device $10_1$ sends back an acknowledgement. This makes it possible to confirm the fact that the polling command is received by the first device $10_1$.

As described above, in the case of polling, only the header part is transmitted as a polling command, and the destination device sends back an acknowledgement, making it possible to confirm the presence of the destination device.

In this embodiment, it is assumed that the basic state is one in which one device among plural devices making up the system performs polling as a representative and the other devices do not perform polling.

In the following, it is assumed that the first device $10_1$ represents plural devices of the system. Needless to say, the representative device is not limited to the first device $10_1$.

As a result of polling the other devices, the representative first device $10_1$ obtains information on devices which are present and are connected to the bus 21. This presence information is transmitted from the first device $10_1$ to the other devices. Specifically, the presence information is carried on the data part described with reference to Fig. 2, and is transmitted as a message for the other devices from the representative first device $10_1$.

In this embodiment, either when a device is newly connected to the bus 21 or when the power is switched on, data is transmitted in accordance with a predetermined communication method. Accordingly, steps of such a communication method are described below with reference to Fig. 5.

This series of steps is started when, for example, an n-th device $10_n$ is newly connected to the bus 21, or when power to an n-th device $10_n$ which is connected to the bus 21, but is not switched on, is newly switched on.

In step S11, as shown in Fig. 3, an n-th control section $11_n$ of the n-th device $10_n$ outputs a polling command to the bus 21 via an n-th interface section $12_n$. The devices, other than the n-th device $10_n$, which are connected to the bus 21, know that the n-th device $10_n$ is connected to the bus 21 in accordance with this polling command.

In step S12, the process branches depending on whether or not the n-th device $10_n$ has received an acknowledgement from the first apparatus $10_1$, for example, within a predetermined time. When the first device $10_1$ is present, since the first device $10_1$ sends back an acknowledgement, it is possible to know the presence of the representative first device $10_1$ according to the presence or absence of the acknowledgement.

More specifically, when it is found that the representative first device $10_1$ is present as a result of receiving the acknowledgement, assuming that the determination is "YES", the process proceeds to step S13.

Thereafter, the n-th device $10_n$ does not output a polling command, and only sends back an acknowledgement to the polling command from the representative device.

In this case, the devices other than the first device $10_1$ know that an acknowledgement is returned from the first device $10_1$ to the n-th device $10_n$ and the first device $10_1$ is a representative device.

On the other hand, when an acknowledgement is not received and it is found that the representative first device $10_1$ is not present, assuming that the determination is "NO", the process returns to step S11. Then, in step S11, a polling command is transmitted again to the representative first device $10_1$.

In step S13, the process branches depending on whether or not the n-th device $10_n$ has received a polling command from the representative first device $10_1$. Then, when the polling command is received, for example, within a predetermined time, assuming that the determination is "YES", the process proceeds to step S14, and when the polling command is not received, assuming that the determination is "NO", the process returns to step S13.

The n-th device $10_n$ waits until a polling command from the representative first device $10_1$ occurs in this step S13.

In step S14, since the n-th device $10_n$ has received the polling command in step S13, an acknowledgement is sent back.

Next, another communication method of this embodiment is described with reference to Fig. 6. In this communication method, when polling is performed among devices, the devices other than the representative first device $10_1$ perform polling to the representative first device $10_1$ more infrequently. The first device $10_1$ and the n-th device $10_n$ perform polling at different levels of frequency.

More specifically, as shown in Fig. 7, the representative first device $10_1$ performs polling at an interval of a first period $T_1$, and the n-th device $10_n$ performs polling at an interval of a second period $T_2$. The second period $T_2$ is longer than the first period $T_1$:

$$T_2 > T_1.$$

Also, when a polling command is received once, the devices themselves other than the representative first device $10_1$ stop polling.

In the initial step S21, the process of the n-th device $10_n$ branches depending on whether or not the second period $T_2$ has elapsed from when the polling command was received previously at the time the polling command is newly received.

The n-th device $10_n$ has contained therein an interval timer for measuring the elapse of time. Whether or not the second period $T_2$ has elapsed is determined according to whether or not this interval timer is 0.

Then, when the second period $T_2$ has elapsed, assuming that the determination is "YES", the process proceeds to step S22. When the second period $T_2$ has not elapsed, assuming that the determination is "NO", the process proceeds to step S25.

When the representative first device $10_1$ is present, since the first device $10_1$ issues a polling command at an interval of the first period $T_1$, the second period $T_2$, which is longer than the first period $T_1$, never elapses. Therefore, when the first device $10_1$ is present, the polling command is transmitted only from the representative first device $10_1$.

Step S22 corresponds to a case in which it is determined that the representative first device $10_1$ is not present in step S21. This is a state in which polling cannot be performed, for example, as a result of the first device $10_1$ being disconnected from the bus 21 or the power being switched off.

In such a case, the n-th device $10_n$ starts polling at the timing when the interval timer reaches the second period $T_2$.

In step S23, the process branches depending on whether or not the n-th device $10_n$ has received an acknowledgement, for example, within a predetermined time. When the acknowledgement has been received, a device of the other party which sent back the acknowledgement is present. When the acknowledgement has not been received, a device of the other party which sends back the acknowledgement is not present.

When the n-th device $10_n$ has received the ac-

knowledgement, assuming that the determination is "YES", the process proceeds to step S24. In step S24, the second period $T_2$ is set to the interval timer. Then, the process returns to step S21.

When the n-th device $10_n$ has not received the acknowledgement, assuming that the determination is "NO", the process returns to step S22. In step S22, the polling command is transmitted again.

On the other hand, step S25 corresponds to a case in which it is determined in step S21 that the first device $10_1$ is present. In this case, since the n-th device $10_n$ has received the polling command from the first device $10_1$, the n-th device $10_n$ recognizes the presence of the first device $10_1$ and starts the counting in the interval timer from that time.

In step S26, the process branches whether or not the n-th device $10_n$ has received a polling command, for example, within a predetermined time. When the polling command has been received, a device of the other party which transmitted the polling command is present. When the polling command has not been received, a device of the other party which transmits the polling command is not present.

When the n-th device $10_n$ has received the polling command, assuming that the determination is "YES", the process proceeds to step S27.

In step S27, the second period $T_2$ is set to the interval timer. In step S28, the n-th device $10_n$ transmits an acknowledgement. Then, the process returns to step S21.

When the n-th device $10_n$ has not received the polling command, assuming that the determination is "NO", the process returns to step S21.

As has thus been described, in at least preferred embodiments of the present invention, a device which is newly connected to the system performs an inquiry once at the time of connection. Also, a device other than a device representing the system performs an inquiry more infrequently than does the representative device.

Therefore, according to at least preferred embodiments of the present invention, it is possible to reduce the bandwidth occupied in the bus and to reliably start up mutual functions among devices.

## Claims

1. A communication method which uses a system in which a plurality of devices (10) are connected with one another by a communication line (21), a representative one ($10_1$) of said devices makes inquiries to the other devices ($10_2$-$10_{n-1}$) at an interval of a first period ($T_1$), and the result of the inquiries is transmitted to the other devices ($10_2$-$10_{n-1}$), allowing the devices to recognise one another, **characterised in that** a device (10n) that is newly connected to the system to become one of said plurality of devices performs an inquiry only once at the time of connection, while said representative device ($10_1$) is present and performs inquiries, and **in that** said newly connected device (10n) starts performing inquiries when said representative device ($10_1$) is disconnected or switched off, after an interval of a second period ($T_2$), longer than said first period ($T_1$), has elapsed, so that said other devices perform inquiries more infrequently than the frequency of inquiry of said representative device ($10_1$).

2. A communication method according to claim 1, wherein said other devices stop an inquiry when an inquiry is received from said representative device ($10_1$).

3. A communication method according to claim 2, wherein said other devices make another inquiry when said representative device ($10_1$) cannot be found by an inquiry.

4. A communication system comprising a plurality of devices (10) connected with one another by a communication line (21), wherein a representative one ($10_1$) of said devices is operative to make inquiries to the other devices ($10_2$-$10_{n-1}$) at an interval of a first period ($T_1$), and to transmit the result of the inquiries to the other devices ($10_2$-$10_{n-1}$), allowing the devices to recognise one another, **characterised in that** a device (10n) that is newly connected to the system to become one of said plurality of devices is operative to perform an inquiry only once at the time of connection, while said representative device ($10_1$) is present and performs inquiries, and **in that** said newly connected device (10n) is operative to start performing enquiries when said representative device ($10_1$) is disconnected or switched off, after an interval of a second period ($T_2$), longer than said first period ($T_1$), has elapsed, so that said other devices perform inquiries more infrequently than the frequency of inquiry of said representative device ($10_1$).

5. A communication system according to claim 4, wherein said other devices are operative to stop an inquiry when an inquiry is received from said representative device ($10_1$).

6. A communication system according to claim 5, wherein said other devices are operative to make another inquiry when said representative device ($10_1$) cannot be found by an inquiry.

## Patentansprüche

1. Kommunikationsverfahren, das ein System benutzt, bei dem mehrere Einrichtungen (10) durch eine Kommunikationsleitung (21) miteinander verbunden sind, wobei eine repräsentative ($10_1$) der Einrichtungen bei einem Intervall einer ersten Periode ($T_1$) An- und/oder Abfragen an die anderen Einrichtungen ($10_2$-$10_{n-1}$) macht, und wobei das Resultat der An- und/oder Abfragen zu den anderen Einrichtungen ($10_2$-$10_n$-$_1$) übertragen wird, was den Einrichtungen ermöglicht, einander zu erkennen, **dadurch gekennzeichnet, dass** eine Einrichtung (10n), die neu an das System angeschlossen wird, um eine der mehreren Einrichtungen zu werden, zur Zeit des Anschlusses, während die repräsentative Einrichtung ($10_1$) präsent ist und An- und/oder Abfragen macht, nur einmal eine An- und/oder Abfrage macht, und dass die neu angeschlossene Einrichtung (10n), wenn die repräsentative Einrichtung ($10_1$) getrennt oder abgeschaltet ist, das Machen von An- und/oder Abfragen beginnt, nachdem ein Intervall einer zweiten Periode ($T_2$) länger als die erste Periode ($T_1$) verstrichen ist, so dass die anderen Einrichtungen weniger oft An- und/oder Abfragen machen als die Frequenz der An- und/oder Abfrage der repräsentativen Einrichtung ($10_1$).

2. Kommunikationsverfahren nach Anspruch 1, wobei die anderen Einrichtungen eine An- und/oder Abfrage stoppen, wenn von der repräsentativen Einrichtung ($10_1$) eine An- und/oder Abfrage empfangen wird.

3. Kommunikationsverfahren nach Anspruch 2, wobei die anderen Einrichtungen eine andere An- und/der Abfrage machen, wenn die repräsentative Einrichtung ($10_1$) durch eine An- und/oder Abfrage nicht gefunden werden kann.

4. Kommunikationssystem, das mehrere Einrichtungen (10) aufweist, die durch eine Kommunikationsleitung (21) miteinander verbunden sind, wobei eine repräsentative ($10_1$) der Einrichtungen so betreibbar ist, dass sie bei einem Intervall einer ersten Periode ($T_1$) An- und/oder Abfragen an die anderen Einrichtungen ($10_2$-$10_{n-1}$) macht und das Resultat der An- und/oder Abfragen zu den anderen Einrichtungen ($10_2$-$10_{n-1}$) überträgt, was den Einrichtungen ermöglicht, einander zu erkennen, **dadurch gekennzeichnet, dass** eine Einrichtung (10n) die neu an das System angeschlossen wird, um eine der mehreren Einrichtungen zu werden, so betreibbar ist, dass sie zur Zeit des Anschlusses, während die repräsentative Einrichtung ($10_1$) präsent ist und An- und/oder Abfragen ausführt, eine An- und/oder Abfrage nur einmal ausführt, und dass die neu angeschlossene Einrichtung (10n) so betreibbar ist, dass sie, wenn die repräsentative Einrichtung ($10_1$) getrennt oder abgeschaltet ist, das Machen von An- und/oder Abfragen beginnt, nachdem ein Intervall einer zweiten Periode ($T_2$) länger als die erste Periode ($T_1$) verstrichen ist, so dass die anderen Einrichtungen weniger oft An- und/oder Abfragen machen als die Frequenz der An- und/oder Abfrage der repräsentativen Einrichtung ($10_1$).

5. Kommunikationssystem nach Anspruch 4, wobei die anderen Einrichtungen so betreibbar sind, dass sie eine An- und/oder Abfrage stoppen, wenn eine An- und/oder Abfrage von der repräsentativen Einrichtungen ($10_1$) empfangen wird.

6. Kommunikationssystem nach Anspruch 5, wobei die anderen Einrichtungen so betreibbar sind, dass sie eine andere An- und/oder Abfrage machen, wenn die repräsentative Einrichtungen ($10_1$) durch eine An- und/oder Abfrage nicht gefunden werden kann.

## Revendications

1. Procédé de communication qui utilise un système dans lequel une pluralité de dispositifs (10) sont connectés les uns aux autres par une ligne de communication (21), un représentatif ($10_1$) desdits dispositifs effectue des interrogations aux autres dispositifs ($10_2$-$10_{n-1}$) à un intervalle d'une première période ($T_1$) et le résultat des interrogations est transmis aux autres dispositifs ($10_2$-$10_{n-1}$), en permettant aux dispositifs de se reconnaître entre eux, **caractérisé en ce qu'**un dispositif ($10_n$) qui est nouvellement connecté au système pour devenir un de ladite pluralité de dispositifs effectue une interrogation seulement un fois au moment de la connexion, alors que ledit dispositif représentatif ($10_1$) est présent et effectue des interrogations, et **en ce que** ledit dispositif nouvellement connecté ($10_n$) commence à effectuer des interrogations quand ledit dispositif représentatif ($10_1$) est déconnecté ou désactivé, après qu'un intervalle d'une deuxième période ($T_2$), plus longue que ladite première période ($T_1$), s'est écoulé, de manière que lesdits autres dispositifs effectuent des interrogations moins fréquemment que la fréquence d'interrogation dudit dispositif représentatif ($10_1$).

2. Procédé de communication selon la revendication 1, dans lequel lesdits autres dispositifs interrompent une interrogation quand une interrogation est reçue en provenance dudit dispositif représentatif ($10_1$).

3. Procédé de communication selon la revendication 2, dans lequel lesdits autres dispositifs effectuent une autre interrogation quand ledit dispositif représentatif ($10_1$) ne peut pas être trouvé par une interrogation.

**4.** Système de communication comprenant une pluralité de dispositifs (10) connectés les uns aux autres par une ligne de communication (21), dans lequel un représentatif ($10_1$) desdits dispositifs est utilisable pour effectuer des interrogations aux autres dispositifs ($10_2$-$10_{n-1}$) à un intervalle d'une première période ($T_1$) et pour transmettre le résultat des interrogations aux autres dispositifs ($10_2$-$10_{n-1}$), en permettant aux dispositifs de se reconnaître entre eux, **caractérisé en ce qu'**un dispositif ($10_n$) qui est nouvellement connecté au système pour devenir un de ladite pluralité de dispositifs est utilisable pour effectuer une interrogation seulement un fois au moment de la connexion, alors que ledit dispositif représentatif ($10_1$) est présent et effectue des interrogations, et **en ce que** ledit dispositif nouvellement connecté ($10_n$) est utilisable pour commencer à effectuer des interrogations quand ledit dispositif représentatif ($10_1$) est déconnecté ou désactivé, après qu'un intervalle d'une deuxième période ($T_2$), plus longue que ladite première période ($T_1$), s'est écoulé, de manière que lesdits autres dispositifs effectuent des interrogations moins fréquemment que la fréquence d'interrogation dudit dispositif représentatif ($10_1$).

**5.** Système de communication selon la revendication 4, dans lequel lesdits autres dispositifs sont utilisables pour interrompre une interrogation quand une interrogation est reçue en provenance dudit dispositif représentatif ($10_1$).

**6.** Système de communication selon la revendication 5, dans lequel lesdits autres dispositifs sont utilisables pour effectuer une autre interrogation quand ledit dispositif représentatif ($10_1$) ne peut pas être trouvé par une interrogation.

FIG. 1

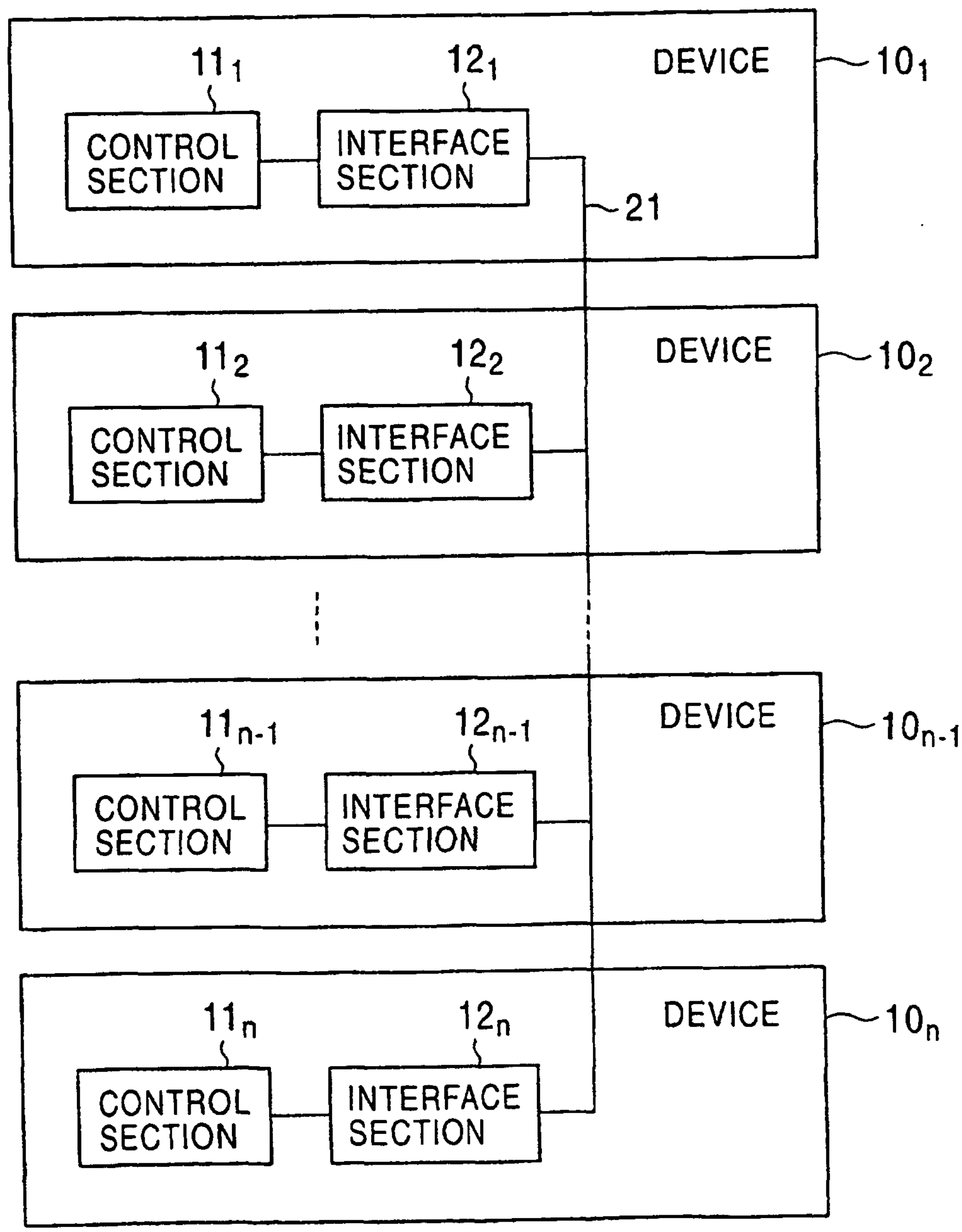
DEVICE
10_1
11_1
12_1
CONTROL SECTION
INTERFACE SECTION
21
DEVICE
10_2
11_2
12_2
CONTROL SECTION
INTERFACE SECTION
DEVICE
10_n-1
11_n-1
12_n-1
CONTROL SECTION
INTERFACE SECTION
DEVICE
10_n
11_n
12_n
CONTROL SECTION
INTERFACE SECTION

FIG. 2

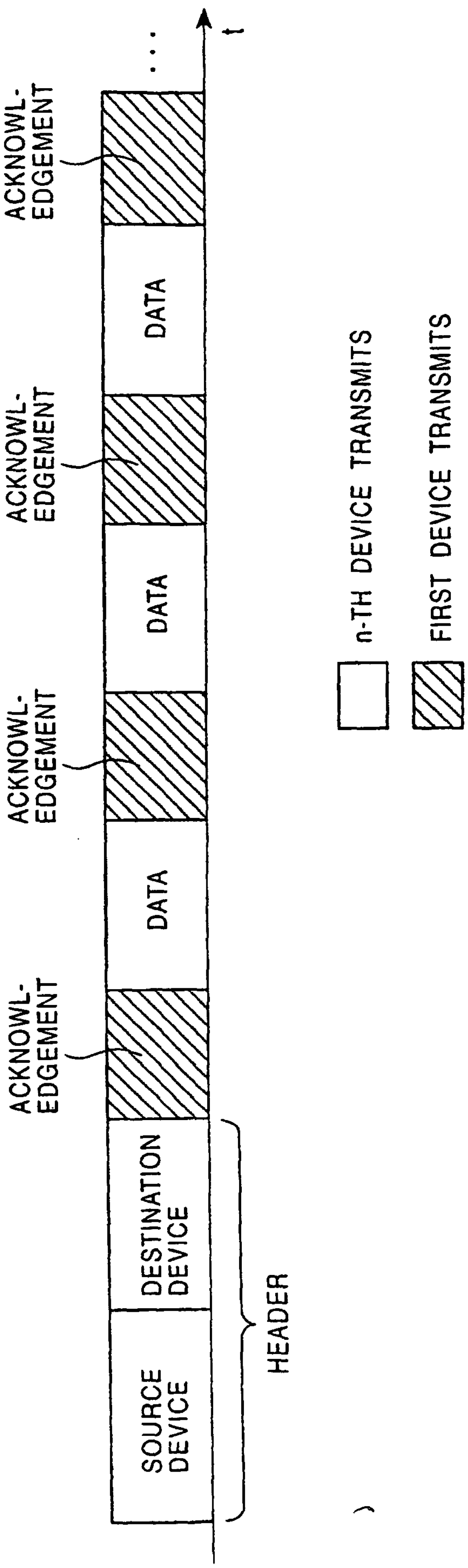
SOURCE DEVICE
DESTINATION DEVICE
HEADER
ACKNOWL-EDGEMENT
DATA
ACKNOWL-EDGEMENT
DATA
ACKNOWL-EDGEMENT
DATA
ACKNOWL-EDGEMENT
t
n-TH DEVICE TRANSMITS
FIRST DEVICE TRANSMITS

FIG. 3

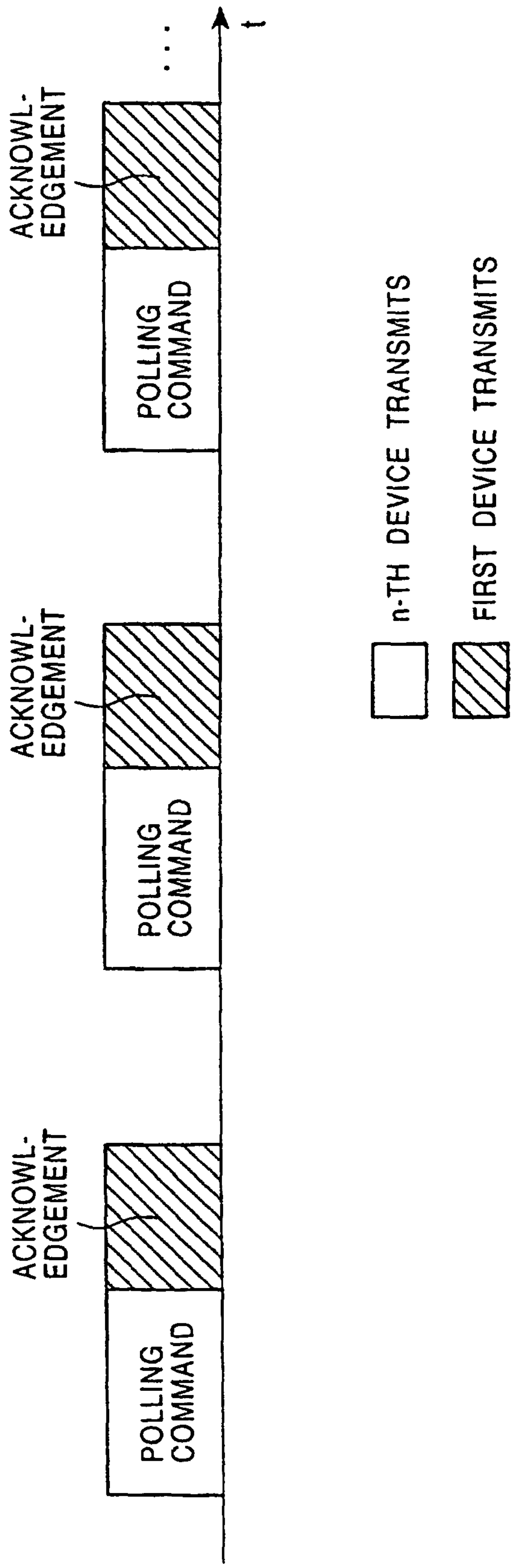
POLLING COMMAND
ACKNOWL-EDGEMENT
POLLING COMMAND
ACKNOWL-EDGEMENT
POLLING COMMAND
ACKNOWL-EDGEMENT
t
n-TH DEVICE TRANSMITS
FIRST DEVICE TRANSMITS

FIG. 4

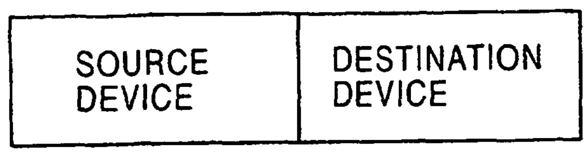
SOURCE DEVICE
DESTINATION DEVICE

FIG. 5

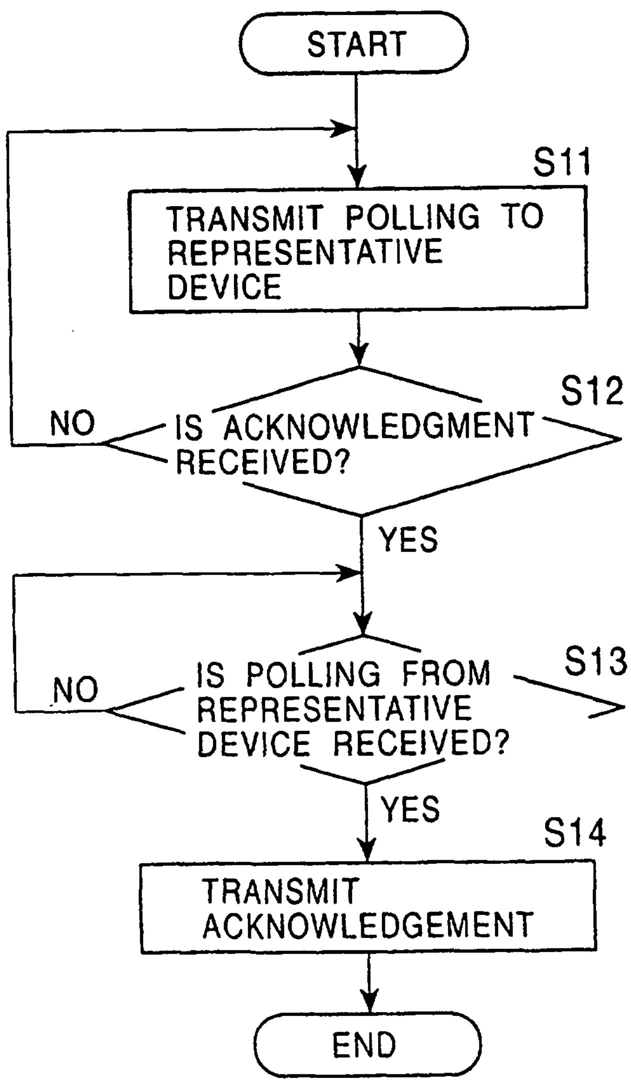
START
S11
TRANSMIT POLLING TO REPRESENTATIVE DEVICE
S12
IS ACKNOWLEDGMENT RECEIVED?
NO
YES
S13
IS POLLING FROM REPRESENTATIVE DEVICE RECEIVED?
NO
YES
S14
TRANSMIT ACKNOWLEDGEMENT
END

FIG. 6

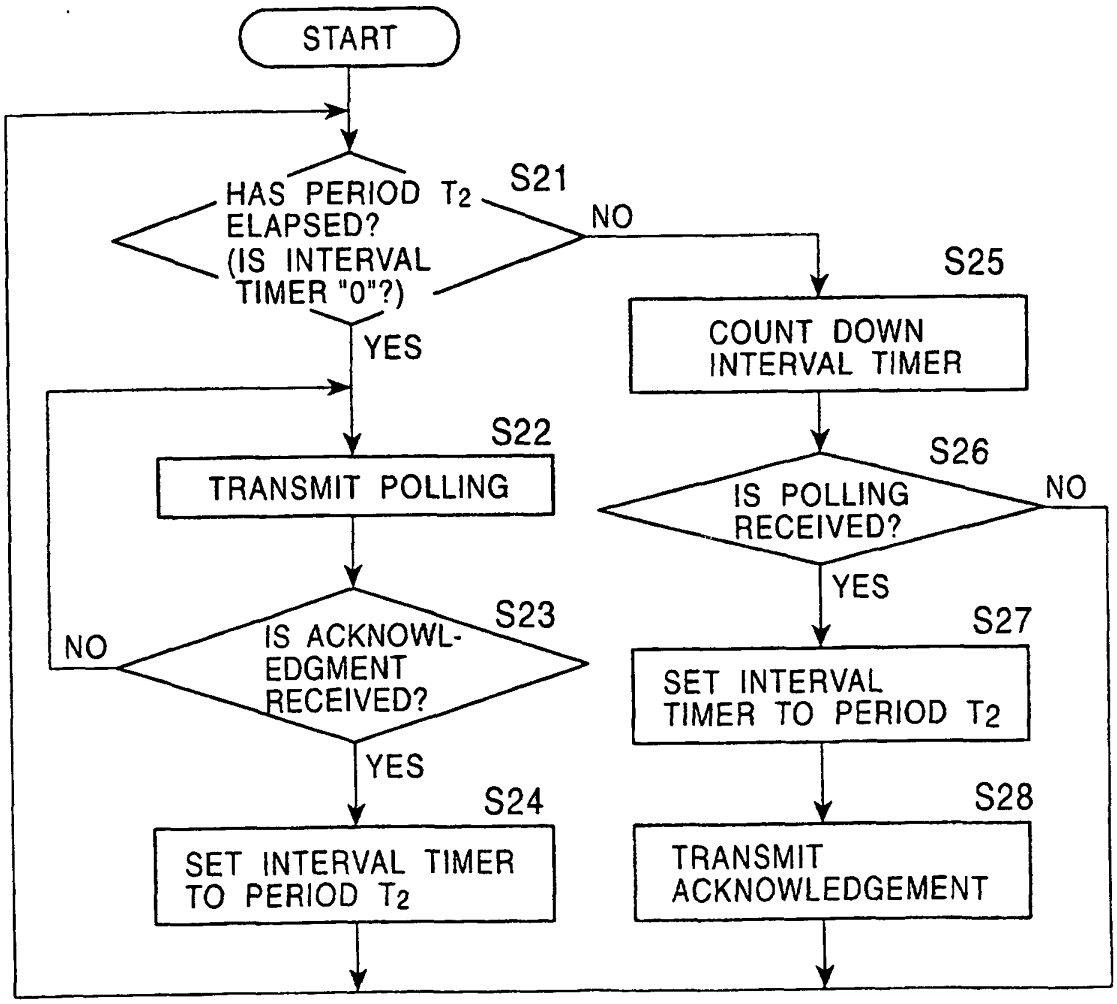
START
HAS PERIOD T2 ELAPSED? (IS INTERVAL TIMER "0"?)
S21
NO
YES
S25
COUNT DOWN INTERVAL TIMER
S22
TRANSMIT POLLING
S26
IS POLLING RECEIVED?
NO
YES
S23
IS ACKNOWL-EDGMENT RECEIVED?
NO
YES
S27
SET INTERVAL TIMER TO PERIOD T2
S24
SET INTERVAL TIMER TO PERIOD T2
S28
TRANSMIT ACKNOWLEDGEMENT

FIG. 7

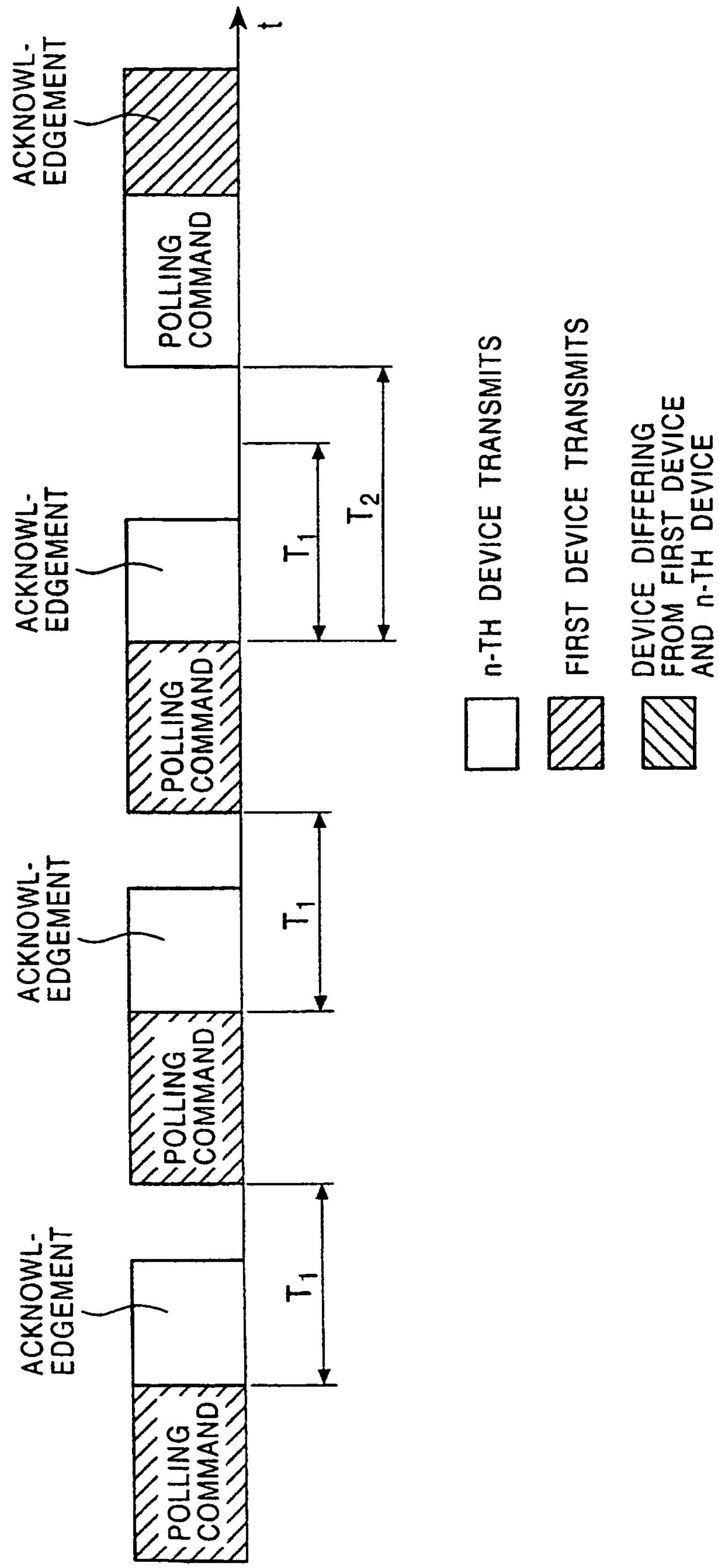
POLLING COMMAND
ACKNOWL-EDGEMENT
T1
POLLING COMMAND
ACKNOWL-EDGEMENT
T1
POLLING COMMAND
ACKNOWL-EDGEMENT
T1
T2
POLLING COMMAND
ACKNOWL-EDGEMENT
t
n-TH DEVICE TRANSMITS
FIRST DEVICE TRANSMITS
DEVICE DIFFERING FROM FIRST DEVICE AND n-TH DEVICE

FIG. 8